# EUROPÄISCHE PATENTANMELDUNG

(11) **EP 4 815 370 A1**
(43) Veröffentlichungstag der Anmeldung: **30.09.2026**
(21) Anmeldenummer: 26167252.1
(22) Anmeldetag: 24.03.2026
(51) Int. Cl.: H04L 9/40, G05B 9/00, H04L 43/02, H04L 43/10

(54) **VORRICHTUNG UND VERFAHREN ZUR ANSTEUERUNG EINER SICHERHEITSTECHNISCHEN EINRICHTUNG IN ABHÄNGIGKEIT EINER INTEGRITÄTSPRÜFUNG EINES NETZWERKS DER INFORMATIONSTECHNOLOGIE**

(30) Priorität: 27.03.2025 DE 102025112050
(71) Anmelder: Pilz GmbH & Co. KG, 73760 Ostfildern (DE)
(72) Erfinder: Neuschwander, Bernd, 73760 Ostfildern (DE); Ibrocevic, Onedin, 73760 Ostfildern (DE)
(74) Vertreter: Witte, Weller & Partner Patentanwälte mbB

(57) **Zusammenfassung**

Vorrichtung (10) zur Ansteuerung einer sicherheitstechnischen Einrichtung in Abhängigkeit einer Integritätsprüfung eines Netzwerks der Informationstechnologie, aufweisend: eine erste Schnittstelle (16) zur Kopplung der Vorrichtung mit einer sicherheitstechnischen Einrichtung, die dazu eingerichtet ist, eine Produktionsanlage (12) in einen sicheren Zustand zu überführen, in dem für Personen oder Gegenstände keine Gefährdung mehr von der Produktionsanlage (12) ausgeht; und eine zweite Schnittstelle (18) zur Kopplung der Vorrichtung mit dem Netzwerk der Informationstechnologie (14). Die Vorrichtung (10) ist dazu eingerichtet, eine Benachrichtigung über eine Netzwerkintegrität über die zweite Schnittstelle (18) zu empfangen und über die erste Schnittstelle (16) der sicherheitstechnischen Einrichtung zu signalisieren, den sicheren Zustand herbeizuführen, wenn die Benachrichtigung ausbleibt und/oder von einer definierten Erwartung abweicht.

## Beschreibung

Die vorliegende Erfindung betrifft eine Vorrichtung und ein Verfahren zur Ansteuerung einer sicherheitstechnischen Einrichtung in Abhängigkeit einer Integritätsprüfung eines Netzwerks der Informationstechnologie.

In der Vergangenheit wurden Unternehmens-IT-Infrastrukturen und industrielle Produktionsanlagen in Unternehmen weitgehend unabhängig voneinander betrieben und verwaltet. Die Unternehmens-IT, die primär aus Computernetzwerken, Servern, Datenbanken und Cloud-Anwendungen gebildet ist, dient der Verwaltung von Geschäftsdaten, der Kommunikation sowie der Steuerung administrativer und logistisch relevanter Prozesse. Produktionsanlagen hingegen umfassen Maschinen, Steuerungssysteme und Automatisierungstechnik, die für die physische Herstellung von Produkten verantwortlich sind. Diese Trennung basierte auf funktionalen, sicherheitstechnischen und technologischen Unterschieden zwischen beiden Bereichen, da Produktionsanlagen häufig auf Echtzeitverarbeitung und physikalische Prozesse ausgerichtet sind, während Unternehmens-IT-Systeme primär auf Datenverarbeitung und Kommunikation ausgerichtet sind.

Mit der fortschreitenden Digitalisierung im Rahmen von Industrie 4.0 wird jedoch zunehmend eine Verschmelzung dieser beiden Bereiche angestrebt. Industrie 4.0 verfolgt das Ziel, Produktionsanlagen durch digitale Vernetzung effizienter, flexibler und intelligenter zu gestalten. Dies beinhaltet beispielsweise die Integration von Sensorik, die Erfassung und Auswertung großer Datenmengen sowie die Möglichkeit, Produktionsprozesse in Echtzeit zu überwachen und zu optimieren. Die Vorteile dieser Vernetzung liegen in einer höheren Effizienz, einer verbesserten Planbarkeit von Wartungsprozessen und einer optimierten Ressourcennutzung. Gleichzeitig ermöglicht die Verbindung von Unternehmens-IT und Produktionsanlagen eine stärkere Automatisierung sowie die Implementierung neuer Geschäftsmodelle, die auf datengetriebenen Entscheidungen basieren.

Die zunehmende Vernetzung führt jedoch auch zu neuen Herausforderungen, insbesondere im Bereich der IT-Sicherheit. Während Unternehmens-IT-Systeme traditionell durch Firewalls, Antivirensoftware und Sicherheitsrichtlinien geschützt werden, waren industrielle Steuerungssysteme und Produktionsanlagen lange Zeit isoliert und weniger anfällig für Cyberbedrohungen. Mit der Anbindung dieser Systeme an Unternehmensnetzwerke und das Internet entsteht jedoch ein erweitertes Angriffsfeld für Cyberkriminelle. Produktionsanlagen, die früher autark funktionierten, können nun Ziel von Cyberangriffen werden, die nicht nur zu Datenverlust, sondern auch zu schwerwiegenden Produktionsstörungen oder sogar physischen Schäden führen können.

Bisher wurden Sicherheitslösungen für Unternehmens-IT und Produktionsanlagen getrennt entwickelt. In der Praxis existieren eigenständige Safety-Lösungen, die sich darauf konzentrieren, Produktionsanlagen im Falle eines technischen oder mechanischen Fehlers sicher abzuschalten. Diese Lösungen sind darauf ausgelegt, Gefährdungen für Personen und Maschinen zu vermeiden und einen kontrollierten Zustand der Produktionsanlage sicherzustellen. Parallel dazu gibt es Security-Lösungen, die sich auf den Schutz der Unternehmens-IT vor Cyberbedrohungen fokussieren. Diese umfassen Maßnahmen wie Intrusion Detection Systeme (IDS), Firewalls, Netzwerksegmentierung und Zugriffskontrollen, um unbefugte Zugriffe oder Schadsoftware zu erkennen und abzuwehren.

Mit der wachsenden Zahl an Cyberangriffen stehen Unternehmen jedoch zunehmend vor der Herausforderung, die Auswirkungen von IT-Sicherheitsvorfällen auf Produktionsanlagen zu beherrschen. Klassische IT-Sicherheitsmaßnahmen reichen nicht mehr aus, um Manipulationen oder gezielte Angriffe auf die vernetzten Steuerungssysteme zu verhindern. Ein erfolgreicher Cyberangriff kann dazu führen, dass Maschinen falsche Steuerbefehle erhalten, Produktionsprozesse gestört oder sicherheitskritische Mechanismen manipuliert werden. Betreiber bestehender Produktionsanlagen stoßen dabei an die Grenzen der bisherigen Sicherheitsarchitekturen, da IT-Sicherheitsvorfälle unvorhersehbare Auswirkungen auf die physische Produktion haben können und bisher keine standardisierten Lösungen existieren, um diese Risiken zuverlässig zu minimieren.

Es besteht daher ein Bedarf an einem neuen Ansatz, der IT-Sicherheitsmechanismen mit sicherheitstechnischen Abschaltmechanismen von Produktionsanlagen kombiniert. Anstatt IT-Security und Safety getrennt zu betrachten, wird eine übergeordnete Lösung benötigt, die in der Lage ist, auf erkannte Cyberbedrohungen automatisiert zu reagieren und Produktionsanlagen in einen sicheren Zustand zu überführen, falls eine potenzielle Manipulation oder ein Angriff erkannt wird.

Es ist daher eine Aufgabe der vorliegenden Offenbarung, eine Vorrichtung und ein Verfahren bereitzustellen, die es ermöglichen, Netzwerkanomalien und potenzielle Bedrohungen automatisch zu identifizieren und darauf basierend geeignete Schutzmaßnahmen in der Produktion zu aktivieren. Insbesondere soll eine zuverlässige und sichere Abschaltung der Produktionsanlage erfolgen können, wenn IT-Sicherheitsrisiken erkannt werden, um mögliche Schäden zu verhindern.

Gemäß einem Aspekt der vorliegenden Offenbarung wird diese Aufgabe gelöst durch eine Vorrichtung zur Ansteuerung einer sicherheitstechnischen Einrichtung in Abhängigkeit einer Integritätsprüfung eines Netzwerks der Informationstechnologie, aufweisend: eine erste Schnittstelle zur Kopplung der Vorrichtung mit einer sicherheitstechnischen Einrichtung, die dazu eingerichtet ist, eine Produktionsanlage in einen sicheren Zustand zu überführen, in dem für Personen oder Gegenstände keine Gefährdung mehr von der Produktionsanlage ausgeht; und eine zweite Schnittstelle zur Kopplung der Vorrichtung mit dem Netzwerk der Informationstechnologie, wobei die Vorrichtung dazu eingerichtet ist, eine Benachrichtigung über eine Netzwerkintegrität über die zweite Schnittstelle zu empfangen und über die erste Schnittstelle der sicherheitstechnischen Einrichtung zu signalisieren, den sicheren Zustand herbeizuführen, wenn die Benachrichtigung ausbleibt und/oder von einer definierten Erwartung abweicht.

Gemäß einem weiteren Aspekt der vorliegenden Offenbarung wird diese Aufgabe gelöst durch ein Verfahren zur Ansteuerung einer sicherheitstechnischen Einrichtung in Abhängigkeit einer Integritätsprüfung eines Netzwerks der Informationstechnologie, aufweisend:
- Bereitstellen einer Vorrichtung mit einer ersten Schnittstelle und mit einer zweiten Schnittstelle, wobei die erste Schnittstelle mit einer sicherheitstechnischen Einrichtung koppelbar und dazu eingerichtet ist, eine Produktionsanlage in einen sicheren Zustand zu überführen, in dem für Personen oder Gegenstände keine Gefährdung mehr von der Produktionsanlage ausgeht, und wobei die zweite Schnittstelle mit dem Netzwerk der Informationstechnologie koppelbar ist;
- Empfangen einer Benachrichtigung über eine Netzwerkintegrität über die zweite Schnittstelle;
- Vergleichen der empfangenen Benachrichtigung mit einer definierten Erwartung, um eine Abweichung oder ein Ausbleiben der Benachrichtigung zu detektieren;
- Signalisieren an die sicherheitstechnische Einrichtung über die erste Schnittstelle, den sicheren Zustand herbeizuführen, wenn die empfangene Benachrichtigung ausbleibt und/oder von der definierten Erwartung abweicht.

Die vorliegende Offenbarung beschreibt somit eine Vorrichtung und ein Verfahren, die dazu dienen, eine sicherheitstechnische Einrichtung in Abhängigkeit von einer Integritätsprüfung eines Netzwerks der Informationstechnologie anzusteuern. Die Vorrichtung bildet eine Verbindung zwischen der IT-Sicherheitsüberwachung und den sicherheitstechnischen Schutzmechanismen einer industriellen technischen Anlage (Produktionsanlage).

In diesem Kontext bezeichnet eine sicherheitstechnische Einrichtung ein technisches System oder eine Vorrichtung, die dazu eingerichtet ist, eine industrielle Produktionsanlage in einen sicheren Zustand zu überführen, um Personen, Maschinen oder die Umgebung vor potenziellen Gefahren zu schützen. Eine solche Einrichtung kann beispielsweise ein Not-Aus-System, eine Sicherheitssteuerung (Safety-SPS), ein übergeordnetes Prozessleitsystem mit Sicherheitsfunktionen oder eine automatische Abschalteinrichtung sein, die bei kritischen Zuständen aktiviert wird. Eine Produktionsanlage kann in diesem Zusammenhang eine beliebige technische Einrichtung oder Maschine sein, die für die Herstellung von Gütern in einem industriellen Umfeld eingesetzt wird. Dazu gehören beispielsweise Fertigungsstraßen in der Automobilindustrie, Verpackungsanlagen in der Lebensmittelverarbeitung, CNC-Maschinen in der Metallverarbeitung oder chemische Reaktoren in der Prozessindustrie.

Die Vorrichtung ist mit einer ersten Schnittstelle ausgestattet, die eine direkte Kopplung mit einer sicherheitstechnischen Einrichtung einer Produktionsanlage ermöglicht. Diese Einrichtung ist darauf ausgelegt, die Produktionsanlage bei Bedarf in einen sicheren Zustand zu überführen, sodass von ihr keine Gefährdung für Personen oder Gegenstände ausgeht.

Zusätzlich verfügt die Vorrichtung über eine zweite Schnittstelle, über die sie mit dem Netzwerk der Informationstechnologie verbunden ist. Über diese Schnittstelle empfängt die Vorrichtung eine Benachrichtigung über die Integrität des Netzwerks. Diese Benachrichtigung kann verschiedene Informationen über den Zustand des Netzwerks enthalten, beispielsweise, ob verdächtige Aktivitäten erkannt wurden, ob Kommunikationsstörungen vorliegen oder ob eine Anomalie identifiziert wurde, die auf einen potenziellen Cyberangriff hindeutet. Die Vorrichtung ist so konfiguriert, dass sie den Zustand der Netzwerkintegrität kontinuierlich überwacht und bei Ausbleiben der Benachrichtigung oder bei einer Abweichung von einer definierten Erwartung eine Signalisierung an die sicherheitstechnische Einrichtung vornimmt.

Ein Vorteil der beanspruchten Lösung besteht darin, dass IT-Sicherheitsereignisse unmittelbar in sicherheitstechnische Maßnahmen umgesetzt werden können. Bisher wurden IT-Sicherheitsüberwachung und sicherheitstechnische Abschaltungen getrennt behandelt, sodass im Falle eines Cyberangriffs oder einer Netzwerkanomalie keine direkte Reaktion auf die Steuerungsebene der Produktionsanlage erfolgte. Dies führte dazu, dass Cyberangriffe auf Produktionsumgebungen potenziell unentdeckt blieben oder erst dann erkannt wurden, wenn bereits Schäden an den Produktionsprozessen oder Maschinen aufgetreten waren. Die hier beschriebene Vorrichtung schafft eine direkte Verknüpfung zwischen der Überwachung der IT-Sicherheit und der Sicherheitssteuerung der Produktionsanlage, sodass erkannte Bedrohungen sofortige und automatisierte Reaktionen nach sich ziehen können.

Durch die Nutzung einer direkten Signalisierung an die sicherheitstechnische Einrichtung wird eine hohe Reaktionsgeschwindigkeit gewährleistet. Sobald eine kritische Abweichung in der Netzwerkintegrität festgestellt wird, kann die Vorrichtung unverzüglich die Anweisung geben, die Produktionsanlage in einen sicheren Zustand zu versetzen. Dies reduziert das Risiko, dass Cyberangriffe oder Netzwerkfehler unkontrollierte Zustände oder Schäden in der Produktion verursachen. Eine manuelle Intervention ist nicht erforderlich, wodurch auch in Situationen, in denen kein menschliches Personal unmittelbar verfügbar ist, eine zuverlässige Schutzmaßnahme gewährleistet bleibt.

Ein weiterer Vorteil ergibt sich aus der Möglichkeit, die Vorrichtung flexibel in bestehende Produktionsumgebungen zu integrieren. Da die Vorrichtung über definierte Schnittstellen mit dem IT-Netzwerk und der sicherheitstechnischen Einrichtung verbunden ist, kann sie unabhängig von der spezifischen Steuerungstechnik oder IT-Infrastruktur einer Anlage eingesetzt werden. Dies erleichtert die Nachrüstung bestehender Anlagen, ohne dass grundlegende Änderungen an der bestehenden IT- oder Safety-Architektur erforderlich sind.

Die Lösung trägt außerdem dazu bei, die Widerstandsfähigkeit von Produktionsanlagen gegenüber Cyberbedrohungen zu erhöhen. Während herkömmliche Sicherheitslösungen oft nur auf die Verhinderung oder Erkennung von Angriffen ausgerichtet sind, bietet die vorliegende Vorrichtung eine direkte Schutzmaßnahme, indem sie auf erkannte Anomalien mit einer sicherheitstechnischen Reaktion reagiert. Dies stellt sicher, dass selbst bei einem erfolgreichen Angriff auf das IT-Netzwerk die Produktionsanlage in einen sicheren Zustand überführt werden kann, bevor größere Schäden oder Gefährdungen eintreten.

Die beanspruchte Lösung ermöglicht somit eine bisher nicht vorhandene Verknüpfung zwischen IT-Security und industrieller Sicherheitstechnik (IT Safety Integration). Sie verbessert nicht nur die allgemeine Sicherheit von Produktionsumgebungen, sondern trägt auch dazu bei, die Betriebskontinuität zu gewährleisten, indem potenziell gefährliche Situationen frühzeitig erkannt und entschärft werden. Diese Lösung ist besonders für industrielle Umgebungen mit kritischer Infrastruktur von Bedeutung, in denen die Sicherheit der Produktionsprozesse und der Schutz vor Cyberangriffen gleichermaßen höchste Priorität haben.

In einer weiteren Ausgestaltung ist die Benachrichtigung über die Netzwerkintegrität ein digitales Signal, ein Datenpaket und/oder eine Protokollnachricht, die jeweils einen aktuellen Status des IT-Netzwerks in Bezug auf dessen Sicherheit und Funktionsfähigkeit beschreiben.

Diese Form der Benachrichtigung ermöglicht eine präzise und effiziente Kommunikation über den aktuellen Status des IT-Netzwerks, sodass die sicherheitstechnische Einrichtung fundierte Entscheidungen über notwendige Schutzmaßnahmen treffen kann.

Ein digitales Signal kann in Form eines kontinuierlichen oder periodischen "Heartbeat"-Signals implementiert werden, das von einer Überwachungseinheit im IT-Netzwerk gesendet wird. Solange dieses Signal regelmäßig empfangen wird, kann die Vorrichtung davon ausgehen, dass das Netzwerk in einem stabilen und sicheren Zustand ist. Sollte das Signal ausbleiben oder in seiner Struktur manipuliert sein, könnte dies auf eine Störung oder einen Angriff hindeuten, woraufhin eine sicherheitstechnische Reaktion eingeleitet werden kann. Diese Art der Überwachung sorgt für eine schnelle und zuverlässige Erkennung von Problemen im IT-Netzwerk, ohne dass eine aufwendige Analyse in Echtzeit erforderlich ist.

Alternativ oder ergänzend kann die Benachrichtigung als strukturiertes Datenpaket erfolgen, das spezifische Informationen über den Zustand des Netzwerks enthält. Dieses Datenpaket kann verschiedene Parameter umfassen, darunter Latenzzeiten, Paketverlustraten, ungewöhnliche Kommunikationsmuster oder erkannte Sicherheitsvorfälle. Durch die strukturierte Übermittlung dieser Daten kann die Vorrichtung eine umfassende Bewertung der Netzwerkintegrität durchführen und anhand definierter Kriterien bestimmen, ob eine sicherheitstechnische Maßnahme erforderlich ist. Ein Vorteil dieser Lösung besteht darin, dass sie eine differenzierte Analyse ermöglicht, bei der nicht nur das Vorhandensein einer Störung festgestellt wird, sondern auch deren potenzielle Ursache und Kritikalität.

Darüber hinaus kann die Benachrichtigung über eine standardisierte Protokollnachricht erfolgen, die auf bestehenden IT-Sicherheitsprotokollen basiert. Diese Nachricht kann beispielsweise aus einem "Security Information and Event Management (SIEM)"-System stammen oder von einem "Intrusion Detection"-System (IDS) generiert werden. Die Nutzung etablierter Protokolle hat den Vorteil, dass die Vorrichtung problemlos in bestehende IT-Infrastrukturen integriert werden kann, ohne dass proprietäre Kommunikationsmechanismen entwickelt werden müssen. Zudem ermöglicht diese Herangehensweise eine hohe Interoperabilität mit anderen Sicherheitslösungen, wodurch eine nahtlose und effiziente Sicherheitsarchitektur geschaffen wird.

Ein weiterer Vorteil dieser Ausgestaltung liegt in der Möglichkeit, die Benachrichtigung mit einer intelligenten Analysefunktion zu kombinieren. So kann das System nicht nur auf einfache Statussignale reagieren, sondern auch komplexe Muster erkennen, die auf schleichende Bedrohungen hindeuten. Beispielsweise kann eine plötzliche Veränderung in der Netzwerkkommunikation oder ein Anstieg von fehlgeschlagenen Anmeldeversuchen als potenzielle Anomalie erkannt werden, selbst wenn noch kein eindeutiger Angriff identifiziert wurde. Dadurch lassen sich proaktive Schutzmaßnahmen ergreifen, bevor es zu einer tatsächlichen Beeinträchtigung der Produktionsanlage kommt.

In einer weiteren Ausgestaltung kann die Benachrichtigung über die Netzwerkintegrität einen Netzwerkstatusbericht des IT-Netzwerks beinhalten.

Gemäß dieser Ausgestaltung kann die Benachrichtigung über die Netzwerkintegrität einen Netzwerkstatusbericht des IT-Netzwerks beinhalten, der bspw. eine umfassende Momentaufnahme der aktuellen Netzwerkbedingungen liefern kann. Ein solcher Bericht kann detaillierte Informationen über verschiedene Parameter wie Latenzzeiten, Datenpaketverluste, ungewöhnliche Kommunikationsmuster, erkannte Bedrohungen oder den Zustand sicherheitsrelevanter Systeme enthalten. Durch die Bereitstellung eines vollständigen Überblicks über die Netzwerkinfrastruktur ermöglicht dieser Ansatz eine differenzierte Bewertung der Sicherheitslage, anstatt lediglich auf das Ausbleiben oder Vorhandensein einer einzelnen Statusmeldung zu reagieren. Dies erlaubt eine präzisere Analyse potenzieller Bedrohungen und hilft dabei, Fehlalarme zu reduzieren, indem nicht jede kleinste Anomalie automatisch zu einer sicherheitstechnischen Abschaltung führt. Zudem kann der Netzwerkstatusbericht genutzt werden, um Trends zu identifizieren und sich wiederholende Muster frühzeitig zu erkennen, wodurch vorbeugende Maßnahmen ergriffen werden können, bevor eine kritische Situation entsteht.

In einer weiteren Ausgestaltung kann die Vorrichtung ferner eine Auswerteeinrichtung aufweisen, die dazu eingerichtet ist, eingehende Benachrichtigungen über die Netzwerkintegrität auszuwerten und basierend darauf eine Entscheidung zutreffen, ob über die erste Schnittstelle der sichere Zustand herbeizuführen ist. Die Auswerteeinrichtung kann eine dedizierte Hardwarekomponente der Vorrichtung sein, insbesondere ein Mikrocontroller oder FPGA. Alternativ oder ergänzend kann die Auswerteeinrichtung eine Softwarekomponente beinhalten, die auf einem industriellen Edge-Computer oder Industrie-PC ausgeführt wird. Ferner kann die Auswerteeinrichtung eine Cloud- oder serverbasierte Auswerteeinrichtung sein, oder eine Kombination der vorgenannten Einrichtungen.

Gemäß diesen Ausgestaltungen kann die Vorrichtung eine Auswerteeinrichtung aufweisen, die eingehende Benachrichtigungen über die Netzwerkintegrität analysiert und auf dieser Basis eine fundierte Entscheidung trifft, ob eine sicherheitstechnische Maßnahme erforderlich ist. Die Möglichkeit, diese Auswerteeinrichtung als dedizierte Hardwarekomponente, als Softwarelösung auf einem Industrie-Edge-Computer oder Industrie-PC oder als cloudbasierte Instanz auszubilden, bietet eine hohe Flexibilität bei der Implementierung und Anpassung an unterschiedliche industrielle Umgebungen. Eine dedizierte Hardwarekomponente wie ein Mikrocontroller oder ein FPGA ermöglicht eine besonders schnelle und zuverlässige Verarbeitung der eingehenden Daten mit minimaler Latenz, was insbesondere in sicherheitskritischen Anwendungen von Vorteil ist. Durch eine Softwarelösung auf einem Industrie-PC oder Edge-Computer kann die Verarbeitung lokal erfolgen, wodurch eine direkte Integration in bestehende industrielle Steuerungssysteme erleichtert wird und eine hohe Rechenleistung für komplexe Analysen zur Verfügung steht. Die Möglichkeit, eine Cloud- oder serverbasierte Auswerteeinrichtung zu verwenden, erlaubt eine zentrale Verwaltung und Analyse großer Datenmengen, wodurch fortschrittliche Algorithmen, einschließlich maschinellen Lernens, zur Erkennung von Anomalien und Cyberbedrohungen genutzt werden können. Durch eine Kombination dieser verschiedenen Ausführungsformen kann ein hybrides System geschaffen werden, das lokale Echtzeitanalysen mit zentralisierten Sicherheitsbewertungen verbindet und somit eine besonders robuste und skalierbare Lösung für den Schutz von Produktionsanlagen gegenüber IT-Sicherheitsrisiken bietet.

In einer weiteren Ausgestaltung kann die Auswerteeinrichtung dazu eingerichtet sein, eine Kommunikationsprüfung, eine Anomalieerkennung und/oder eine Bedrohungsanalyse durchzuführen. Beispielsweise kann die Auswerteeinrichtung dazu eingerichtet sein, die Netzwerkintegrität mittels eines Punktesystems zu bewerten, bei dem verschiedene detektierte Anomalien mit einer Gewichtung versehen werden, und eine sicherheitstechnische Abschaltung auszulösen, wenn ein definierter Schwellenwert überschritten wird. Ferner kann die Auswerteeinrichtung ein selbstlernendes Modell für Anomalieerkennung umfassen, das auf maschinellem Lernen basiert und Abweichungen von einem normalen Netzwerkverkehr des IT-Netzwerks anhand historischer Daten erkennt. Ebenso kann die Auswerteeinrichtung mit einer Datenbank gekoppelt sein, die historische Netzwerkintegritätsdaten speichert, um die Bewertung der Netzwerkintegrität durch Vergleich mit früheren Mustern zu optimieren.

Gemäß diesen Ausgestaltungen kann die Auswerteeinrichtung eine Kommunikationsprüfung, eine Anomalieerkennung und eine Bedrohungsanalyse durchführen, um eine fundierte Entscheidung über die Netzwerkintegrität und die Notwendigkeit einer sicherheitstechnischen Abschaltung zu treffen. Durch die Möglichkeit, eine Kommunikationsprüfung durchzuführen, kann die Vorrichtung kontinuierlich überwachen, ob erwartete Signale und Datenströme innerhalb des IT-Netzwerks wie vorgesehen verlaufen. Ein Abweichen von definierten Kommunikationsmustern kann frühzeitig erkannt werden, um potenzielle Störungen oder Manipulationen im Netzwerk zu identifizieren.

Die Anomalieerkennung ermöglicht es, ungewöhnliche Aktivitäten oder Verhaltensweisen innerhalb des Netzwerks zu erkennen, die nicht zwangsläufig bekannten Angriffsmustern entsprechen, aber dennoch auf ein potenzielles Sicherheitsproblem hinweisen. Indem die Auswerteeinrichtung ein Punktesystem verwendet, bei dem verschiedene detektierte Anomalien mit einer Gewichtung versehen werden, kann eine differenzierte Sicherheitsbewertung erfolgen. Je nach Schwere und Häufigkeit der festgestellten Anomalien wird ein Gesamtwert berechnet, und wenn ein definierter Schwellenwert überschritten wird, kann automatisch eine sicherheitstechnische Abschaltung ausgelöst werden. Diese Methodik verhindert unnötige Abschaltungen aufgrund einzelner unkritischer Abweichungen und stellt sicher, dass nur bei tatsächlichen Sicherheitsrisiken Maßnahmen ergriffen werden.

Durch den Einsatz eines selbstlernenden Modells für Anomalieerkennung kann sich die Auswerteeinrichtung kontinuierlich verbessern und an neue Bedrohungsszenarien anpassen. Auf Basis maschinellen Lernens kann das System Abweichungen vom normalen Netzwerkverkehr identifizieren und dabei historische Daten heranziehen, um Fehlalarme zu reduzieren und gezielte Bedrohungen effektiver zu erkennen. Indem die Auswerteeinrichtung mit einer Datenbank gekoppelt ist, die vergangene Netzwerkintegritätsdaten speichert, kann ein kontinuierlicher Abgleich mit früheren Mustern erfolgen. Dies ermöglicht eine langfristige Bewertung der Netzwerkintegrität und eine genauere Identifikation von wiederkehrenden oder neuen Bedrohungen.

Diese Ausgestaltung bietet somit eine hohe Flexibilität und Präzision in der Sicherheitsbewertung, da sie sowohl auf vordefinierten Regeln als auch auf dynamisch lernenden Algorithmen basiert. Durch eine Kombination von Kommunikationsprüfung, Anomalieerkennung und Bedrohungsanalyse kann ein umfassendes Schutzsystem geschaffen werden, das nicht nur auf bekannte Angriffe reagiert, sondern auch unbekannte Bedrohungen frühzeitig erkennt und entsprechende Gegenmaßnahmen einleiten kann. Die Fähigkeit, historische Daten und selbstlernende Modelle einzusetzen, trägt dazu bei, die Resilienz des Systems zu erhöhen und Sicherheitsstrategien an neue Bedrohungsformen anzupassen, ohne dass ständige manuelle Aktualisierungen erforderlich sind.

In einer weiteren Ausgestaltung kann die Auswerteeinrichtung dazu eingerichtet sein, Netzwerkaktivitäten mit vorab definierten Bedrohungsmustern aus einem Bedrohungsinformationssystem (engl.: Threat Intelligence) zu vergleichen und den sicheren Zustand herbeizuführen, wenn ein Bedrohungsmuster erkannt wird.

Gemäß dieser Ausgestaltung kann die Auswerteeinrichtung Netzwerkaktivitäten mit vorab definierten Bedrohungsmustern aus einem Bedrohungsinformationssystem vergleichen und den sicheren Zustand herbeiführen, wenn ein Bedrohungsmuster erkannt wird. Durch die Nutzung eines solchen Bedrohungsinformationssystems kann die Vorrichtung auf eine durchgehend aktualisierte Datenbank bekannter Angriffsmuster, Schwachstellen und Bedrohungsszenarien zugreifen. Dies ermöglicht eine präzise und proaktive Erkennung von potenziellen Gefahren, indem verdächtige Aktivitäten im IT-Netzwerk unmittelbar mit bekannten Indikatoren für Angriffe abgeglichen werden.

Ein wesentlicher Vorteil dieser Ausgestaltung liegt in der Fähigkeit, Bedrohungen nahezu in Echtzeit zu identifizieren und darauf zu reagieren. Sobald ein Netzwerkverhalten erkannt wird, das mit einem bekannten Bedrohungsmuster übereinstimmt, kann die Auswerteeinrichtung ohne Verzögerung eine sicherheitstechnische Maßnahme einleiten, um die betroffene Produktionsanlage in einen sicheren Zustand zu versetzen. Dies ist insbesondere bei hochkritischen Bedrohungen wie Ransomware-Angriffen oder gezielten Cyberattacken von Bedeutung, bei denen ein schnelles Eingreifen notwendig ist, um größere Schäden oder Betriebsausfälle zu verhindern.

Ein weiterer Vorteil ergibt sich aus der kontinuierlichen Anpassung der Sicherheitsstrategie an neue Bedrohungslagen. Da Bedrohungsinformationssysteme regelmäßig aktualisiert werden und neue Angriffsmethoden erfassen, kann die Vorrichtung fortlaufend mit den neuesten Erkenntnissen aus der Cybersicherheitsforschung angereichert werden. Dadurch bleibt das System auch gegenüber sich entwickelnden und bisher unbekannten Bedrohungen widerstandsfähig, ohne dass aufwendige manuelle Sicherheitsupdates notwendig sind.

Darüber hinaus kann die Nutzung vorab definierter Bedrohungsmuster dazu beitragen, Fehlalarme zu reduzieren. Da nicht jede Netzwerkabweichung automatisch als Angriff gewertet wird, sondern ein Abgleich mit realen Bedrohungsszenarien erfolgt, können unnötige Abschaltungen minimiert werden. Dies verbessert die Betriebskontinuität der Produktionsanlagen, während gleichzeitig ein hohes Maß an Sicherheit gewährleistet bleibt.

In einer weiteren Ausgestaltung kann die Auswerteeinrichtung eine mehrstufige Reaktionsstrategie implementieren, bei der zunächst zur Herbeiführung des sicheren Zustands Warnmeldungen ausgegeben werden und eine sicherheitstechnische Abschaltung nur bei anhaltender oder eskalierender Bedrohung erfolgt.

Gemäß dieser Ausgestaltung kann die Auswerteeinrichtung eine mehrstufige Reaktionsstrategie implementieren, bei der zunächst Warnmeldungen ausgegeben werden, um auf potenzielle Sicherheitsrisiken hinzuweisen, bevor eine sicherheitstechnische Abschaltung erfolgt. Eine solche gestufte Herangehensweise trägt dazu bei, dass Sicherheitsmaßnahmen nicht überstürzt oder unnötig ergriffen werden, sondern dass zunächst eine differenzierte Bewertung der Bedrohungslage erfolgt. Der Begriff mehrstufige Reaktionsstrategie beschreibt in diesem Zusammenhang ein Verfahren, bei dem unterschiedliche Eskalationsstufen definiert sind, um auf eine sich entwickelnde Bedrohungslage angemessen zu reagieren.

Die erste Stufe der Reaktionsstrategie kann die Ausgabe von Warnmeldungen umfassen, die betroffene Systemkomponenten oder verantwortliche Personen darüber informieren, dass Anomalien oder potenzielle Bedrohungen im IT-Netzwerk festgestellt wurden. Diese Warnmeldungen können in Form von Protokollnachrichten, Dashboards, E-Mail-Benachrichtigungen oder direkten Meldungen an übergeordnete Steuerungssysteme erfolgen. Durch diese frühzeitige Information erhalten Betreiber und Sicherheitssysteme die Möglichkeit, das Risiko weiter zu analysieren, ohne dass sofortige drastische Maßnahmen erforderlich sind.

Sollte sich die Bedrohung verstärken oder über einen definierten Zeitraum bestehen bleiben, kann die Auswerteeinrichtung eine zweite Stufe der Reaktionsstrategie einleiten. In diesem Fall kann eine Teilabschaltung bestimmter nicht-kritischer Systeme oder eine Netzwerksegmentierung erfolgen, um die potenzielle Gefahr einzugrenzen, ohne die gesamte Produktionsanlage zu unterbrechen. Dies ermöglicht eine kontrollierte Schadensbegrenzung, während gleichzeitig noch manuelle Eingriffe oder zusätzliche Sicherheitsüberprüfungen durchgeführt werden können.

Erst wenn sich die Bedrohung als ernsthaft und eskalierend erweist oder kritische Systembereiche direkt betroffen sind, erfolgt eine sicherheitstechnische Abschaltung. Dies bedeutet, dass die betroffene Produktionsanlage in einen vordefinierten sicheren Zustand überführt wird, um Schäden an Maschinen, Prozessen oder Personen zu verhindern. Diese abschließende Maßnahme stellt sicher, dass keine unkontrollierten Zustände entstehen, die den Produktionsbetrieb gefährden oder Sicherheitsrisiken mit sich bringen könnten.

Ein Vorteil der mehrstufigen Reaktionsstrategie liegt in der Vermeidung unnötiger Produktionsunterbrechungen. Anstatt bei jedem Verdachtsmoment eine vollständige Abschaltung der Produktionsanlage einzuleiten, wird zunächst eine Eskalationsbewertung durchgeführt, die sicherstellt, dass Maßnahmen nur dann ergriffen werden, wenn sie tatsächlich erforderlich sind. Dies trägt zur Verbesserung der Betriebskontinuität bei und reduziert wirtschaftliche Einbußen durch nicht notwendige Produktionsstillstände. Ein weiterer Vorteil besteht darin, dass durch die schrittweise Eskalation zusätzliche Daten gesammelt und ausgewertet werden können, bevor eine endgültige sicherheitstechnische Maßnahme durchgeführt wird. Dies erhöht die Präzision der Bedrohungserkennung und ermöglicht eine genauere Unterscheidung zwischen tatsächlichen Angriffen und harmlosen Netzwerkabweichungen. Die Kombination aus frühzeitiger Warnung, kontrollierter Eskalation und gezielter Abschaltung macht diese Ausgestaltung besonders effizient für den Schutz industrieller Produktionsanlagen vor IT-Sicherheitsrisiken.

In einer weiteren Ausgestaltung kann die Auswerteeinrichtung eine künstliche Intelligenz umfassen, die über neuronale Netzwerke trainiert ist, um typische und atypische Kommunikationsmuster im IT-Netzwerk zu unterscheiden.

Gemäß dieser Ausgestaltung kann die Auswerteeinrichtung eine künstliche Intelligenz umfassen, die über neuronale Netzwerke trainiert ist, um typische und atypische Kommunikationsmuster im IT-Netzwerk zu unterscheiden. Die Verwendung künstlicher Intelligenz in diesem Kontext ermöglicht eine fortschrittliche und adaptive Analyse der Netzwerkintegrität, die über statische Regeln und vordefinierte Bedrohungsmuster hinausgeht. Der Begriff künstliche Intelligenz (KI) bezeichnet dabei eine computerbasierte Technologie, die in der Lage ist, durch Erfahrung zu lernen und Muster eigenständig zu erkennen. Insbesondere durch den Einsatz von neuronalen Netzwerken können große Mengen an Netzwerkverkehrsdaten analysiert und komplexe Zusammenhänge zwischen verschiedenen Kommunikationsparametern identifiziert werden.

Ein neuronales Netzwerk ist ein mathematisches Modell, das von der Funktionsweise des menschlichen Gehirns inspiriert ist. Es ist aus mehreren Schichten künstlicher Neuronen gebildet, die Informationen empfangen, verarbeiten und weiterleiten. In der vorliegenden Anwendung kann das neuronale Netzwerk bspw. anhand historischer Kommunikationsmuster des IT-Netzwerks trainiert werden, um typische Verhaltensweisen zu lernen und von verdächtigen oder unbekannten Mustern zu unterscheiden. Dies ermöglicht eine dynamische Anomalieerkennung, bei der nicht nur bekannte Bedrohungen identifiziert werden, sondern auch neue, bisher unbekannte Angriffsmethoden oder Netzwerkanomalien erkannt werden können.

Ein Vorteil dieser Ausgestaltung besteht in der Fähigkeit der KI, sich kontinuierlich an veränderte Netzwerkbedingungen anzupassen. Herkömmliche sicherheitsbasierte Überwachungssysteme basieren häufig auf festen Regeln oder Schwellenwerten, die bei neuen Bedrohungsszenarien manuell angepasst werden müssen. Im Gegensatz dazu kann ein KI-gestütztes System selbstständig lernen, welche Netzwerkverhaltensweisen als normal gelten, und sich automatisch an neue Angriffsmethoden oder veränderte Kommunikationsmuster anpassen. Dadurch bleibt die Bedrohungserkennung stets auf dem neuesten Stand, ohne dass eine ständige manuelle Aktualisierung erforderlich ist.

Ein weiterer Vorteil liegt in der Reduzierung von Fehlalarmen. Durch die Fähigkeit, komplexe Muster in großen Datenmengen zu erkennen, kann das neuronale Netzwerk zwischen legitimen Netzwerkabweichungen und tatsächlichen Bedrohungen unterscheiden. Dies führt zu einer höheren Präzision in der Sicherheitsbewertung und verhindert unnötige Produktionsunterbrechungen aufgrund von falsch positiven Warnmeldungen. Darüber hinaus kann die KI in Echtzeit arbeiten und verdächtige Muster nahezu sofort identifizieren. Dies ist insbesondere für industrielle Produktionsumgebungen von Vorteil, in denen ein schneller Schutzmechanismus erforderlich ist, um Cyberangriffe oder Manipulationen an kritischen Steuerungssystemen frühzeitig zu erkennen und abzuwehren. Die Kombination aus selbstlernender Bedrohungserkennung, kontinuierlicher Anpassung an neue Angriffsmethoden und einer Reduktion von Fehlalarmen macht diese Ausgestaltung besonders geeignet für die sichere Vernetzung von Industrie-4.0-Systemen.

In einer weiteren Ausgestaltung kann die Auswerteeinrichtung die Entscheidung über die Herbeiführung des sicheren Zustands unter Berücksichtigung einer Vielzahl von Parametern treffen, einschließlich, aber nicht beschränkt auf: Latenzzeiten im Netzwerk, Paketverlustraten, ungewöhnliche Verbindungen zu externen Servern, IDS/IPS-Alarmmeldungen, die Häufigkeit von fehlgeschlagenen Anmeldeversuchen. Ferner kann die Auswerteeinrichtung verschiedene Gewichtungsfaktoren für einzelne Anomalieparameter verwenden, um die Wahrscheinlichkeit einer tatsächlichen Bedrohung zu bestimmen.

Gemäß dieser Ausgestaltung kann die Auswerteeinrichtung die Entscheidung über die Herbeiführung des sicheren Zustands unter Berücksichtigung einer Vielzahl von Parametern treffen, um eine umfassende und differenzierte Bewertung der Netzwerkintegrität zu ermöglichen. Durch die Analyse verschiedener Indikatoren lässt sich die Sicherheitslage genauer erfassen, wodurch Fehlalarme minimiert und gezielte Schutzmaßnahmen eingeleitet werden können.

Der Begriff Latenzzeiten im Netzwerk beschreibt die Verzögerung, die zwischen dem Senden und dem Empfangen von Datenpaketen innerhalb eines Netzwerks auftritt. Eine plötzliche Erhöhung der Latenzzeit kann auf Netzwerküberlastungen, fehlerhafte Kommunikation oder potenzielle Cyberangriffe hindeuten. Die Paketverlustrate gibt an, wie viele gesendete Datenpakete nicht erfolgreich beim Empfänger ankommen. Hohe Paketverluste können auf eine Überlastung, eine fehlerhafte Netzwerkstruktur oder auf aktive Manipulationen durch Angreifer hinweisen, die versuchen, legitimen Datenverkehr zu stören oder umzuleiten.

Ein weiteres relevantes Kriterium ist das Auftreten von ungewöhnlichen Verbindungen zu externen Servern. Falls ein IT-System oder eine Produktionsanlage plötzlich mit unbekannten oder verdächtigen IP-Adressen kommuniziert, könnte dies ein Anzeichen für einen Angriff oder eine unbefugte Datenübertragung sein. Solche Kommunikationsmuster können auf sogenannte Command-and-Control-Verbindungen hinweisen, die von Schadsoftware genutzt werden, um Befehle von einem Angreifer zu empfangen.

Die Berücksichtigung von IDS/IPS-Alarmmeldungen stellt sicher, dass verdächtige Aktivitäten, die von Intrusion Detection Systemen (IDS) oder Intrusion Prevention Systemen (IPS) erfasst wurden, in die sicherheitstechnische Bewertung einfließen. Diese Systeme analysieren den Netzwerkverkehr und erkennen potenziell schädliche Aktivitäten wie Port-Scans, verdächtige Login-Versuche oder Exploit-Versuche, die auf eine Sicherheitsverletzung hindeuten könnten.

Ein weiteres entscheidendes Kriterium ist die Häufigkeit von fehlgeschlagenen Anmeldeversuchen. Eine plötzliche oder anhaltende Zunahme gescheiterter Login-Versuche kann ein Hinweis auf Brute-Force-Angriffe oder unbefugte Zugriffsversuche sein. Falls solche Aktivitäten festgestellt werden, kann die Auswerteeinrichtung die Bedrohung entsprechend bewerten und gegebenenfalls Gegenmaßnahmen einleiten.

Ein Vorteil dieser Ausgestaltung liegt in der dynamischen Bedrohungsbewertung, bei der nicht nur einzelne Sicherheitsindikatoren isoliert betrachtet werden, sondern eine ganzheitliche Analyse mehrerer Parameter erfolgt. Dies ermöglicht eine präzisere Einschätzung der Sicherheitslage und verhindert, dass einzelne harmlose Anomalien sofort zu drastischen Maßnahmen wie einer Abschaltung führen. Ein weiterer Vorteil ist die Erhöhung der Reaktionsgeschwindigkeit, da die Auswerteeinrichtung auf Basis von Echtzeitdaten eine fundierte Entscheidung treffen kann. Anstatt auf vordefinierte Sicherheitsregeln oder statische Schwellenwerte angewiesen zu sein, kann das System intelligente Korrelationen zwischen verschiedenen Parametern herstellen und Bedrohungen frühzeitig erkennen. Darüber hinaus sorgt die Flexibilität dieser Methode dafür, dass die Sicherheitsmechanismen an unterschiedliche Netzwerktopologien und industrielle Umgebungen angepasst werden können. Produktionsanlagen mit besonders hohen Sicherheitsanforderungen können beispielsweise strengere Schwellwerte definieren, während weniger kritische Systeme ein toleranteres Bewertungsmodell nutzen können. Die Kombination dieser Faktoren führt zu einer robusteren Sicherheitsarchitektur, die sowohl reaktive als auch präventive Schutzmaßnahmen effizient miteinander verbindet.

In einer weiteren Ausgestaltung kann die Auswerteeinrichtung mit externen Cybersecurity-Plattformen kommunizieren, um in Echtzeit aktuelle Bedrohungsinformationen abzurufen und die Sicherheitsentscheidung entsprechend anzupassen. Insbesondere kann die tatsächliche Analyse der Netzwerkintegrität einer externen Plattform überlassen werden, während die Vorrichtung primär für die Herbeiführung des sicheren Zustands eingerichtet ist.

Gemäß dieser Ausgestaltung kann die Auswerteeinrichtung mit externen Cybersecurity-Plattformen kommunizieren, um in Echtzeit aktuelle Bedrohungsinformationen abzurufen und die Sicherheitsentscheidung entsprechend anzupassen. Dies ermöglicht eine fortlaufende Aktualisierung der Bedrohungserkennung, da die Vorrichtung nicht nur auf lokal gespeicherte Daten oder statische Regeln angewiesen ist, sondern auf eine breite Basis globaler Sicherheitsanalysen zugreifen kann. Durch diese Anbindung an externe Plattformen kann das System neue Angriffsmethoden und Bedrohungsszenarien berücksichtigen, die in herkömmlichen, isolierten IT-Sicherheitslösungen möglicherweise nicht rechtzeitig erkannt würden.

Eine Cybersecurity-Plattform bezeichnet in diesem Zusammenhang eine cloud- oder serverbasierte Lösung, die Bedrohungsdaten aus verschiedenen Quellen sammelt, auswertet und bereitstellt. Solche Plattformen nutzen sogenannte "Threat Intelligence Feeds", maschinelles Lernen und heuristische Analysen, um Cyberangriffe zu identifizieren und Unternehmen in Echtzeit vor neuen Gefahren zu warnen. Indem die Auswerteeinrichtung auf diese externen Informationen zugreift, kann sie aktuelle Bedrohungsmuster direkt mit dem beobachteten Netzwerkverkehr abgleichen und auf Basis der neuesten Erkenntnisse über Cyberbedrohungen eine fundierte Entscheidung über erforderliche Sicherheitsmaßnahmen treffen.

Ein wesentlicher Vorteil dieser Ausgestaltung besteht darin, dass die tatsächliche Analyse der Netzwerkintegrität einer leistungsfähigen, externen Plattform überlassen werden kann, während sich die Vorrichtung primär auf die Herbeiführung des sicheren Zustands konzentriert. Dies reduziert den Rechenaufwand und die Komplexität innerhalb der Vorrichtung selbst, da keine aufwendigen Algorithmen zur Bedrohungsanalyse lokal ausgeführt werden müssen. Dadurch kann das System auch auf leistungsschwächeren industriellen Geräten implementiert werden, ohne dass dies die Erkennungsgenauigkeit oder Reaktionsgeschwindigkeit beeinträchtigt. Ein weiterer Vorteil liegt in der kontinuierlichen Verbesserung der Sicherheitsmechanismen. Da Cyberbedrohungen sich ständig weiterentwickeln, kann eine lokal betriebene Sicherheitslösung schnell veralten. Durch die Anbindung an externe Plattformen bleibt die Bedrohungserkennung jedoch stets auf dem neuesten Stand, da neue Angriffstechniken und Exploits in Echtzeit erkannt und entsprechende Gegenmaßnahmen ergriffen werden können. Dies trägt dazu bei, dass die Sicherheitsstrategie nicht nur reaktiv, sondern auch proaktiv gestaltet wird.

Zudem ermöglicht diese Architektur eine hohe Skalierbarkeit und Interoperabilität. Unternehmen können unterschiedliche Cybersecurity-Dienste und Bedrohungsdatenquellen in ihre bestehende IT-Sicherheitsstrategie integrieren, ohne dass tiefgreifende Änderungen an der eigenen Infrastruktur erforderlich sind. Die Vernetzung mit externen Plattformen bietet somit eine zukunftssichere Lösung, die sich flexibel an veränderte Bedrohungslagen und technologische Weiterentwicklungen anpassen kann.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.
Fig. 1 zeigt ein Anwendungsszenario eines Ausführungsbeispiels einer Vorrichtung gemäß der vorliegenden Offenbarung.
Fig. 2 zeigt in einer schematischen Darstellung ein Ausführungsbeispiel einer Vorrichtung gemäß der vorliegenden Offenbarung.
Fig. 3A, 3B, 3C und 3D zeigen unterschiedliche JSON-basierte Netzwerkintegritätsbenachrichtigungen.
Fig. 4 zeigt in einem Blockdiagramm ein Ausführungsbeispiel eines Verfahrens gemäß der vorliegenden Offenbarung.

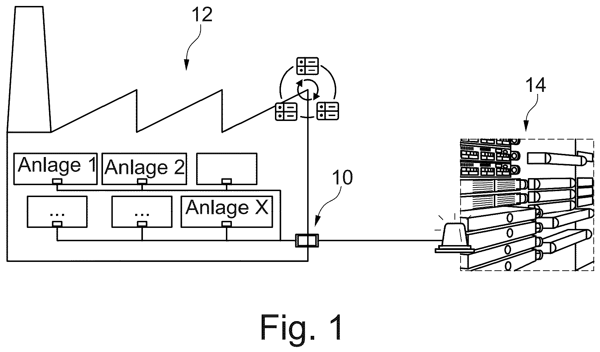

Fig. 1 zeigt ein Anwendungsszenario eines Ausführungsbeispiels einer Vorrichtung gemäß der vorliegenden Offenbarung. Die Vorrichtung, die in ihrer Gesamtheit mit dem Bezugszeichen 10 bezeichnet ist, befindet sich an der Schnittstelle zwischen einer Produktionsanlage 12 und der Unternehmens-IT 14. In diesem Szenario übernimmt die Vorrichtung eine zentrale Rolle bei der Überwachung der Netzwerkintegrität und der Einleitung sicherheitstechnischer Maßnahmen, falls eine Bedrohung erkannt wird.

Die Produktionsanlage 12 kann verschiedene industrielle Steuerungssysteme, Maschinen und sicherheitstechnische Einrichtungen umfassen, die für den Betrieb der Fertigungsprozesse verantwortlich sind. Dazu gehören speicherprogrammierbare Steuerungen (SPS), industrielle Steuerungsrechner und sicherheitskritische Komponenten, die dazu eingerichtet sind, Maschinen und Produktionslinien in einem festgelegten Rahmen zu betreiben. Diese Systeme sind auf Echtzeitverarbeitung ausgelegt, um präzise Steuerbefehle an die Maschinen zu übermitteln. Gleichzeitig ist die Produktionsanlage mit einer sicherheitstechnischen Einrichtung ausgestattet, die bei Gefahrensituationen dafür sorgt, dass die Maschinen in einen sicheren Zustand überführt werden.

Die Unternehmens-IT 14 ist für die zentrale Verwaltung, Datenverarbeitung und Überwachung der gesamten IT-Infrastruktur zuständig. Sie kann Netzwerkserver, Datenbanken, Cloud-Dienste sowie Security-Management-Systeme umfassen, die Angriffe erkennen und Bedrohungsanalysen durchführen. In der heutigen Industrie-4.0-Umgebung sind diese Systeme zunehmend mit der Produktionsanlage 12 vernetzt, um eine optimierte Steuerung, Datenauswertung und vorausschauende Wartung zu ermöglichen. Die Unternehmens-IT 14 kann darüber hinaus mit Sicherheitslösungen ausgestattet sein, darunter Firewalls, Intrusion Detection Systeme (IDS) und Security Information and Event Management (SIEM)-Plattformen, die potenzielle Bedrohungen innerhalb des Netzwerks analysieren und dokumentieren.

Die Vorrichtung 10 übernimmt in dem vorliegenden Szenario, Informationen über die Netzwerkintegrität von der Unternehmens-IT 14 zu empfangen und auszuwerten. Sie verfügt über eine erste Schnittstelle 16 zur Kopplung mit der sicherheitstechnischen Einrichtung der Produktionsanlage 12 und eine zweite Schnittstelle 18 zur Verbindung mit dem IT-Netzwerk 14. Falls eine Bedrohung erkannt wird, beispielsweise durch den Ausfall eines erwarteten Heartbeat-Signals, eine ungewöhnlich hohe Anzahl fehlgeschlagener Anmeldeversuche oder einen Identitätsabgleich mit einer Bedrohungsdatenbank etc., kann die Vorrichtung 10 eine sicherheitstechnische Entscheidung treffen. In einem ersten Schritt kann bspw. eine Warnung an das betroffene System oder an das Betriebspersonal ausgegeben werden. Falls die Bedrohung eskaliert oder die Anomalie weiterhin besteht, kann die Vorrichtung 10 ferner über ihre erste Schnittstelle 16 ein Signal an die sicherheitstechnische Einrichtung der Produktionsanlage 12 senden, um technische Einrichtungen oder Maschinen der Produktionsanlage 12 in einen sicheren Zustand zu versetzen.

Diese Architektur stellt sicher, dass Angriffe auf die Unternehmens-IT 14 nicht unkontrolliert auf die Produktionssysteme übergreifen können. Gleichzeitig wird die betriebliche Sicherheit gewährleistet, da eine direkte Verbindung zwischen der IT-Sicherheitsüberwachung und der sicheren Abschaltung der Produktionsanlagen 12 geschaffen wird. Dadurch kann verhindert werden, dass erfolgreiche Cyberangriffe auf das IT-Netzwerk 14 zu Produktionsstörungen, fehlerhaften Maschinensteuerungen oder sogar physischen Schäden an Anlagen und Personal führen.

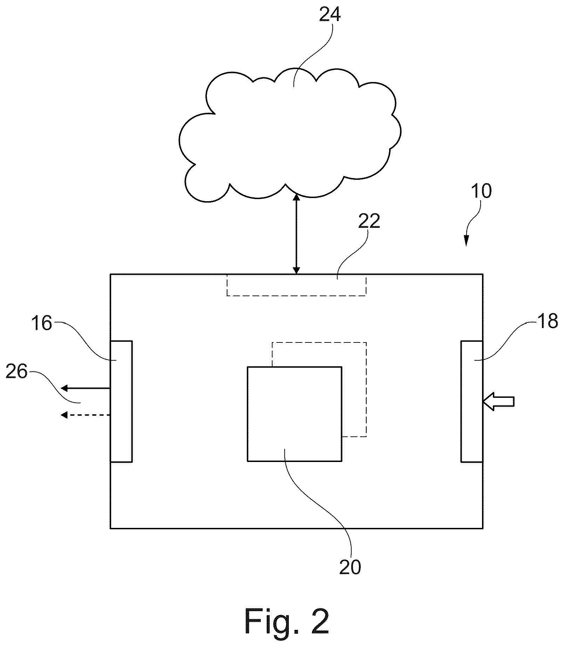

Fig. 2 zeigt in einer schematischen Darstellung ein Ausführungsbeispiel einer Vorrichtung gemäß der vorliegenden Offenbarung. In diesem Ausführungsbeispiel umfasst die Vorrichtung 10 eine erste Schnittstelle 16, eine zweite Schnittstelle 18 und eine Auswerteeinrichtung 20. Diese Elemente sind funktional miteinander verbunden, um eine zuverlässige Überwachung der Netzwerkintegrität und eine gezielte Ansteuerung der sicherheitstechnischen Einrichtung einer Produktionsanlage 12 zu ermöglichen.

Die erste Schnittstelle 16 ist zur Kopplung mit einer sicherheitstechnischen Einrichtung ausgelegt, die dazu eingerichtet ist, eine Produktionsanlage 12 in einen sicheren Zustand zu überführen. Diese sicherheitstechnische Einrichtung kann beispielsweise ein Not-Aus-System, eine Sicherheits-SPS oder ein übergeordnetes Safety-Management-System sein, das bestimmte Maschinen oder Produktionsprozesse im Falle einer Bedrohung kontrolliert herunterfährt. Die Implementierung dieser Schnittstelle kann über industrielle Feldbusprotokolle wie PROFINET, EtherCAT oder Modbus erfolgen, sodass eine direkte Anbindung an bestehende sicherheitstechnische Steuerungen möglich ist. Alternativ kann die erste Schnittstelle 16 ein drahtloses Kommunikationsmodul umfassen, das eine Signalisierung über sichere Funkprotokolle ermöglicht.

Die zweite Schnittstelle 18 dient der Verbindung mit dem IT-Netzwerk der Unternehmens-IT 14, um relevante Daten über die Netzwerkintegrität zu empfangen. Diese Schnittstelle 18 kann in Form eines physischen Netzwerkanschlusses wie Ethernet oder einer drahtlosen Anbindung mittels Wi-Fi oder 5G ausgebildet sein. Je nach Implementierung können über die zweite Schnittstelle 18 Daten des IT-Netzwerks 14 erfasst werden, um eine kontinuierliche Überwachung des IT-Netzwerks 14 zu ermöglichen, bspw. in dem Kommunikationsmuster analysiert werden, um potenzielle Anomalien zu erkennen. Alternativ oder ergänzend kann die zweite Schnittstelle 18 mit bestehenden Sicherheitsinfrastrukturen wie Firewalls, Intrusion Detection Systemen (IDS) oder Security Information und Event Management (SIEM)-Plattformen verbunden sein, um Bedrohungsinformationen zu empfangen und darauf basierend eine sicherheitstechnische Entscheidung zu treffen.

Die Auswerteeinrichtung 20 der Vorrichtung 10 kann als zentrales Element die Verarbeitung der eingehenden Daten übernehmen, um anhand definierter Kriterien eine Entscheidung über die Herbeiführung des sicheren Zustands zu treffen. In einer möglichen Implementierung kann die Auswerteeinrichtung 20 als dedizierte Hardwarekomponente realisiert sein, beispielsweise durch einen Mikrocontroller oder einen FPGA, wodurch eine schnelle und deterministische Verarbeitung gewährleistet wird. Alternativ kann die Auswerteeinrichtung 20 als Softwarelösung auf einem industriellen Edge-Computer oder Industrie-PC ausgeführt werden, was eine flexible Anpassung der Analysemethoden und Algorithmen ermöglicht.

In einer weiteren Ausgestaltung kann die Auswerteeinrichtung ein selbstlernendes Modell für Anomalieerkennung umfassen, das auf maschinellem Lernen basiert und durch den Vergleich mit historischen Netzwerkdaten typische und atypische Kommunikationsmuster unterscheidet. Hierbei kann ein neuronales Netzwerk eingesetzt werden, das anhand von Trainingsdaten aus der Netzwerkinfrastruktur spezifische Bedrohungsmuster erlernt und eigenständig neue Bedrohungen identifizieren kann. Alternativ oder ergänzend kann die Auswerteeinrichtung mit einer externen Cybersecurity-Plattform verbunden sein, die in Echtzeit Bedrohungsinformationen bereitstellt und eine dynamische Anpassung der Sicherheitsentscheidung ermöglicht.

Eine weitere mögliche Implementierung umfasst eine mehrstufige Reaktionsstrategie, bei der die Auswerteeinrichtung 20 zunächst Warnmeldungen generiert, bevor eine sicherheitstechnische Abschaltung erfolgt. Diese Strategie kann darauf basieren, dass die Vorrichtung 10 nicht nur auf einzelne Anomalien reagiert, sondern eine Bewertung mehrerer Parameter wie Latenzzeiten, IDS/IPS-Alarmmeldungen oder ungewöhnliche Verbindungen zu externen Servern durchführt. Durch ein Punktesystem oder eine gewichtete Risikoanalyse kann die Entscheidung über eine Abschaltung erst dann getroffen werden, wenn mehrere Bedrohungsindikatoren auf eine kritische Sicherheitslage hinweisen.

Wie in Fig. 2 angedeutet, kann die Vorrichtung in verschiedenen Ausführungsformen zusätzlich eine weitere Schnittstelle 22 aufweisen. Diese Schnittstelle 22 ermöglicht eine Verbindung mit einer Cloud-Umgebung 24, in der die Analyse der Netzwerkintegrität teilweise oder vollständig übernommen wird. Durch diese Erweiterung kann die Vorrichtung 10 auf leistungsstarke externe Rechenressourcen zugreifen, wodurch eine tiefgehende Bedrohungsanalyse möglich wird, ohne dass alle Berechnungen lokal auf der Vorrichtung selbst durchgeführt werden müssen.

Die weitere Schnittstelle 22 kann als kabelgebundene oder drahtlose Verbindung ausgebildet sein. In einer physischen Implementierung kann die Verbindung über eine Ethernet-Schnittstelle erfolgen, die die Vorrichtung mit einer sicheren, speziell für industrielle Anwendungen ausgelegten Cloud-Infrastruktur verbindet. Alternativ kann die Verbindung über ein Mobilfunkmodul realisiert sein, das beispielsweise 4G-, 5G- oder LTE-Technologien nutzt, um eine schnelle und redundante Anbindung an die Cloud 24 zu gewährleisten. Auch eine Implementierung über Wi-Fi oder industrielle Funkstandards wie LoRaWAN ist denkbar, um eine kabellose und flexible Netzwerkanbindung sicherzustellen.

Durch die Anbindung an eine Cloud 24 kann die eigentliche Analyse der Netzwerkintegrität in eine leistungsfähigere Umgebung ausgelagert werden, in der umfassendere Rechenoperationen und fortschrittliche Algorithmen zum Einsatz kommen. Insbesondere können KI-gestützte Bedrohungserkennungssysteme oder Big-Data-Analysen in der Cloud 24 durchgeführt werden, um komplexe Muster zu identifizieren, die mit herkömmlichen lokal ausgeführten Methoden nur schwer zu erkennen sind. Die Vorrichtung 10 kann dabei entweder nur bestimmte vorverarbeitete Daten an die Cloud 24 weiterleiten oder die vollständige Analyse extern durchführen lassen.

In einer möglichen Implementierung kann die Vorrichtung 10 lediglich Rohdaten oder verdichtete Statusmeldungen über die zweite Schnittstelle 18 empfangen und über die weitere Schnittstelle 22 an die Cloud 24 senden, während die Cloud-Analyse eine umfangreiche Korrelation mit globalen Bedrohungsdatenbanken und Echtzeit-Bedrohungsfeeds durchführt. Die Vorrichtung 10 empfängt dann über die weitere Schnittstelle 22 eine aggregierte Bewertung oder eine Anomalieklassifikation von der Cloud 24 zurück, die als Entscheidungsgrundlage für sicherheitstechnische Maßnahmen dient. Eine alternative Implementierung könnte darin bestehen, dass die Vorrichtung 10 bereits eine erste Analyse durchführt und nur im Verdachtsfall eine detaillierte Untersuchung in die Cloud 24 auslagert, um so Bandbreitenressourcen effizient zu nutzen.

Die Nutzung einer Cloud-basierten Analyse bietet mehrere Vorteile. Durch den Zugriff auf stets aktualisierte Bedrohungsinformationen und eine kontinuierlich lernende Infrastruktur kann die Bedrohungserkennung dynamisch angepasst werden, ohne dass Updates oder manuelle Konfigurationen auf der Vorrichtung erforderlich sind. Ein weiterer Vorteil ergibt sich aus der Fähigkeit, mehrere Anlagen oder Standorte zentral zu überwachen. Falls eine Vorrichtung an einer Produktionsanlage eine Anomalie meldet, kann die Cloud 24 diese Informationen mit anderen Standorten abgleichen und potenzielle Muster oder Angriffswellen frühzeitig erkennen. Dies verbessert die Präzision der Sicherheitsbewertung und ermöglicht ein präventives Eingreifen, bevor größere Schäden auftreten.

In sicherheitskritischen Umgebungen kann die Cloud-Anbindung redundant ausgelegt werden, sodass bei einem Ausfall der Cloud-Analyse die Vorrichtung weiterhin eine lokale Entscheidungslogik nutzen kann. Diese hybride Architektur kombiniert die Vorteile einer leistungsfähigen externen Analyse mit der Zuverlässigkeit einer eigenständigen, vor Ort betriebenen Sicherheitslösung, um eine durchgängige Überwachung der Netzwerkintegrität sicherzustellen.

Fig. 2 zeigt, dass die Vorrichtung 10 mehrkanalig redundant ausgebildet sein kann, was durch die gestrichelt dargestellte doppelte Auslegung der Auswerteeinrichtung 20 und der von der ersten Schnittstelle bereitgestellten Signalisierung 26 angedeutet ist. Durch diese redundante Architektur wird sichergestellt, dass die Vorrichtung 10 auch bei einem möglichen Ausfall einer ihrer Komponenten weiterhin funktionsfähig bleibt und eine sichere Ansteuerung der sicherheitstechnischen Einrichtung gewährleistet werden kann. Die doppelte Ausführung der Auswerteeinrichtung erlaubt es, kritische Prozesse unabhängig voneinander zu überwachen und eine Plausibilitätsprüfung der Netzwerkintegritätsbewertung vorzunehmen, bevor eine sicherheitstechnische Maßnahme eingeleitet wird.

Die Vorrichtung 10 kann somit selbst als sicherheitstechnische Einrichtung fungieren, indem sie wie andere Sicherheitsgeber beispielsweise redundante OSSD-Signale (Output Signal Switching Device) an der ersten Schnittstelle 16 ausgibt, um eine nachgeschaltete sicherheitstechnische Einrichtung anzusteuern. Solche OSSD-Signale werden typischerweise in sicherheitsgerichteten Steuerungen und Sensoren verwendet, um eine zuverlässige Abschaltung oder Steuerung von Maschinen und Anlagen zu gewährleisten. Durch die mehrkanalige Redundanz kann die Vorrichtung Fehlfunktionen kompensieren und sicherstellen, dass eine Abschaltung auch dann erfolgt, wenn eine einzelne Komponente ausfällt oder eine fehlerhafte Signalisierung erkannt wird.

Um in sicherheitskritischen industriellen Umgebungen eingesetzt werden zu können, kann die Vorrichtung 10 nach einschlägigen Sicherheitsnormen zertifiziert sein, beispielsweise nach ISO 13849-1 für funktionale Sicherheit von Steuerungen oder IEC 61508, die allgemeine Anforderungen an sicherheitsgerichtete Systeme definiert. Abhängig von der jeweiligen Anwendung und den spezifischen Anforderungen kann die Vorrichtung eine bestimmte Safety Integrity Level (SIL)-Einstufung nach IEC 61508 oder eine Performance Level (PL)-Bewertung gemäß ISO 13849-1 aufweisen. Diese Zertifizierungen bestätigen, dass die Vorrichtung den erforderlichen Sicherheitsstandards entspricht und in industriellen Sicherheitsanwendungen zuverlässig eingesetzt werden kann.

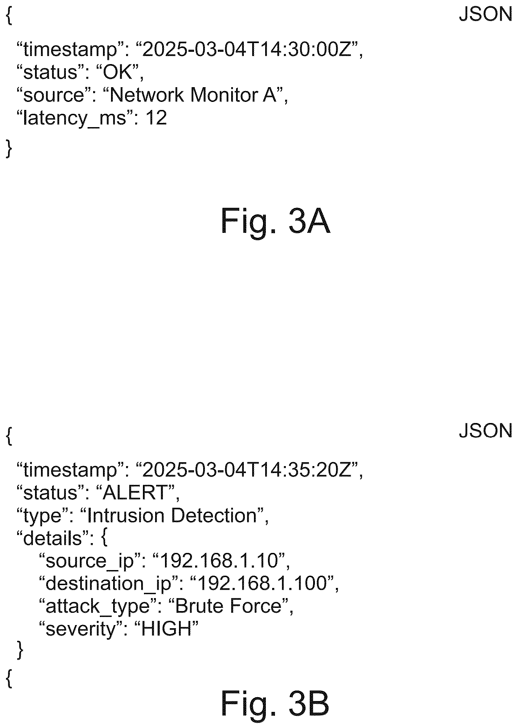

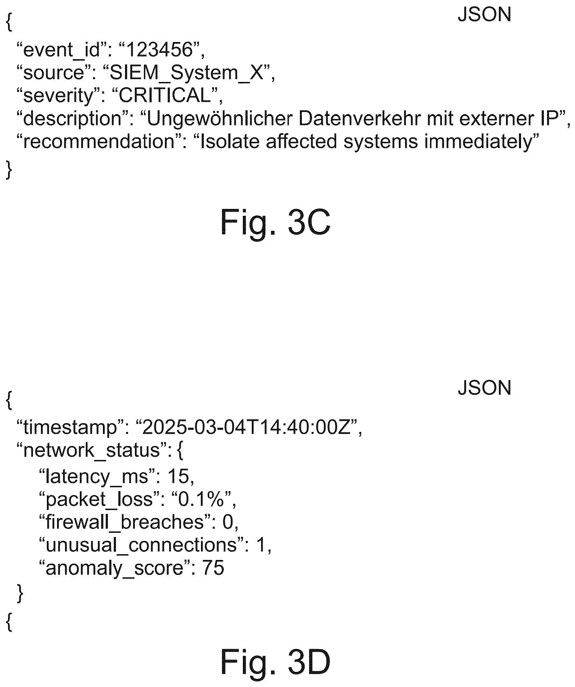

Fig. 3A, 3B, 3C und 3D zeigen unterschiedliche JSON-basierte Netzwerkintegritätsbenachrichtigungen, die als Beispiele für verschiedene Mechanismen zur Überwachung der Netzwerkintegrität dienen. Diese Nachrichten repräsentieren verschiedene Arten von Statusmeldungen, die von der Vorrichtung 10 erfasst, ausgewertet und als Grundlage für sicherheitstechnische Entscheidungen verwendet werden können.

Fig. 3A zeigt eine Netzwerkintegritätsbenachrichtigung in Form eines Heartbeat-Signals (Keep-Alive). Diese periodische Nachricht kann von einem Netzwerküberwachungsdienst generiert werden und wesentliche Parameter zur Bewertung der aktuellen Netzwerkstabilität enthalten. Das JSON-Format dieser Nachricht enthält in diesem Ausführungsbeispiel einen Zeitstempel, eine Statusmeldung, eine Angabe zur Quelle der Nachricht sowie eine Latenzzeit in Millisekunden. Ein Beispiel hierfür wäre eine Meldung mit dem Status "OK", die signalisiert, dass das Netzwerk erwartungsgemäß funktioniert. Falls dieses Signal über einen definierten Zeitraum hinweg ausbleibt oder sich die Werte der enthaltenen Parameter signifikant ändern, wie beispielsweise eine drastische Erhöhung der Latenzzeit oder vermehrte Paketverluste, könnte dies als Anomalie gewertet werden. In einem solchen Fall könnte die Vorrichtung 10 eine Warnung auslösen oder weitere Maßnahmen zur Überprüfung der Netzwerkintegrität einleiten.

Fig. 3B zeigt eine Netzwerkintegritätsbenachrichtigung in Form eines Intrusion Detection System (IDS) Alerts. Diese Art der Meldung wird von einem Eindringlingserkennungssystems (engl. Intrusion Detection System) generiert, sobald eine potenzielle Cyberbedrohung erkannt wird. Die JSON-Struktur enthält in diesem Ausführungsbeispiel einen Zeitstempel, den Status "ALERT" sowie spezifische Details zur erkannten Bedrohung. In diesem Fall wird eine Quell-IP-Adresse, eine Ziel-IP-Adresse, die Art des Angriffs - beispielsweise ein Brute-Force-Angriff - sowie eine Einstufung der Schwere des Angriffs übermittelt. Falls eine Bedrohung als "HIGH" eingestuft wird, könnte die Vorrichtung 10 eine sicherheitstechnische Abschaltung der betroffenen Produktionssysteme oder eine Isolierung des kompromittierten Netzwerks veranlassen.

Fig. 3C zeigt eine Netzwerkintegritätsbenachrichtigung, die aus einem SIEM-System (engl. "Security Information and Event Management") stammt. SIEM-Systeme aggregieren und analysieren sicherheitsrelevante Ereignisse aus verschiedenen Quellen innerhalb eines Netzwerks. Die JSON-Struktur dieser Nachricht enthält in diesem Ausführungsbeispiel eine eindeutige Ereignis-ID, die Quelle der Meldung - beispielsweise ein übergeordnetes SIEM-System -, eine Schweregrad-Einstufung sowie eine Beschreibung der erkannten Bedrohung. Zusätzlich kann die Meldung eine Empfehlung zur weiteren Vorgehensweise enthalten, wie etwa die sofortige Isolation betroffener Systeme. Falls eine Bedrohung als "CRITICAL" eingestuft wird, könnte die Vorrichtung 10 in Echtzeit eine automatisierte Sicherheitsreaktion auslösen, um mögliche Schäden an der Produktionsumgebung zu verhindern.

Fig. 3D zeigt eine Netzwerkintegritätsbenachrichtigung in Form eines detaillierten Netzwerkstatusberichts. Diese Art der Meldung enthält eine Vielzahl an Parametern zur umfassenden Bewertung des aktuellen Netzwerkzustands. Das JSON-Dokument enthält in diesem Ausführungsbeispiel einen Zeitstempel sowie verschiedene Kennwerte wie Latenzzeiten, Paketverluste, die Anzahl erkannter Firewall-Durchbrüche und die Anzahl ungewöhnlicher Netzwerkverbindungen. Hervorzuheben ist der "Anomaly Score", eine numerische Bewertung der Netzwerkintegrität, die auf Basis einer Analyse verschiedener Indikatoren berechnet wird. Falls dieser Wert einen vordefinierten Schwellenwert überschreitet, kann die Vorrichtung 10 eine abgestufte Sicherheitsmaßnahme einleiten, beispielsweise zunächst eine Warnung ausgeben und bei weiter anhaltenden Abweichungen eine sicherheitstechnische Abschaltung veranlassen.

Die vier Beispiele gemäß Fig. 3A-D verdeutlichen unterschiedliche Methoden, mit denen die Netzwerkintegrität überwacht und bewertet werden kann. Die Vorrichtung 10 nutzt diese Informationen, um sicherzustellen, dass Bedrohungen frühzeitig erkannt werden und eine gezielte Sicherheitsreaktion erfolgen kann. Die Flexibilität der JSON-basierten Benachrichtigungen erlaubt es, verschiedene Datenquellen zu integrieren, Echtzeitanalysen durchzuführen und Sicherheitsmaßnahmen entsprechend der jeweiligen Bedrohungslage zu eskalieren.

Obwohl die in Fig. 3A, 3B, 3C und 3D gezeigten Netzwerkintegritätsbenachrichtigungen im JSON-Format dargestellt sind, ist dieses Format lediglich ein Beispiel für die Strukturierung und Übermittlung sicherheitsrelevanter Informationen. In alternativen Implementierungen könnten diese Benachrichtigungen auch in anderen Formaten realisiert werden, beispielsweise XML (Extensible Markup Language), das eine hierarchische Struktur zur Darstellung und Speicherung von Daten bietet und in vielen industriellen Kommunikationssystemen weitverbreitet ist. Eine XML-Implementierung könnte besonders in Umgebungen mit bestehenden SOAP-Webdiensten oder OPC-UA-Architekturen von Vorteil sein, in denen strukturierte Daten mit umfangreichen Metadaten und Validierungsmechanismen erforderlich sind. Ebenso könnten proprietäre Binärformate oder Protokolle wie Protobuf (Protocol Buffers) oder MessagePack zum Einsatz kommen, um kompakte, hochperformante Datenübertragungen zu ermöglichen. Die Wahl des Formats hängt von den spezifischen Anforderungen der jeweiligen industriellen Infrastruktur ab, insbesondere in Bezug auf Latenzzeiten, Speicherplatzoptimierung und Interoperabilität mit bestehenden Sicherheitssystemen.

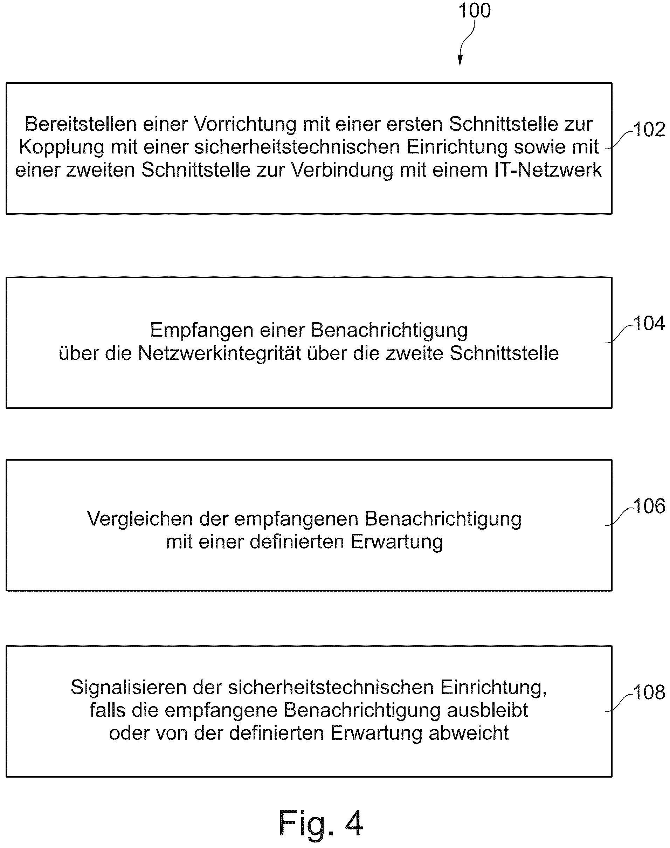

Fig. 4 zeigt ein Blockdiagramm, das die vier Schritte des Verfahrens 100 zur Ansteuerung einer sicherheitstechnischen Einrichtung in Abhängigkeit einer Integritätsprüfung eines Netzwerks der Informationstechnologie veranschaulicht. Block 102 zeigt das Bereitstellen der Vorrichtung, wobei diese mit einer ersten Schnittstelle zur Kopplung mit einer sicherheitstechnischen Einrichtung sowie einer zweiten Schnittstelle zur Verbindung mit dem IT-Netzwerk ausgestattet ist. In diesem Schritt wird die Infrastruktur geschaffen, die eine kontinuierliche Überwachung der Netzwerkintegrität ermöglicht.

Block 104 beschreibt das Empfangen einer Benachrichtigung über die Netzwerkintegrität über die zweite Schnittstelle. Die Vorrichtung erfasst Statusinformationen des IT-Netzwerks, die beispielsweise über ein Heartbeat-Signal, eine IDS-Alarmmeldung oder einen Netzwerkstatusbericht bereitgestellt werden. Diese Benachrichtigung enthält essenzielle Parameter zur Bewertung der Sicherheit und Funktionsfähigkeit des Netzwerks.

In Block 106 erfolgt das Vergleichen der empfangenen Benachrichtigung mit einer definierten Erwartung. Die Vorrichtung analysiert die übermittelte Netzwerkintegritätsbenachrichtigung und überprüft, ob der erhaltene Status mit vordefinierten Normalwerten oder Schwellenwerten übereinstimmt. Falls eine Abweichung festgestellt wird, die auf eine potenzielle Bedrohung oder eine Störung hinweist, wird eine Entscheidung über eine notwendige Sicherheitsmaßnahme getroffen.

Block 108 stellt schließlich das Signalisieren an die sicherheitstechnische Einrichtung dar, falls die empfangene Benachrichtigung ausbleibt oder von der definierten Erwartung abweicht. In diesem Fall sendet die Vorrichtung ein entsprechendes Signal über die erste Schnittstelle an die sicherheitstechnische Einrichtung, um die Produktionsanlage in einen sicheren Zustand zu überführen. Dies kann eine vollständige Abschaltung, eine Reduzierung der Betriebsleistung oder eine gezielte Isolation bestimmter Anlagenteile umfassen, um mögliche Schäden oder Gefahren zu verhindern.

Es wird darauf hingewiesen, dass die vorstehenden Ausführungsbeispiele nur exemplarisch sind und weitere Varianten einzelner Komponenten möglich sind, um Ausgestaltungen der nachfolgenden Ansprüche zu realisieren. Der Schutzumfang der vorliegenden Erfindung wird durch die folgenden Ansprüche bestimmt und ist nicht durch die in der Beschreibung erläuterten oder in den Figuren dargestellten Merkmale begrenzt.

## Patentansprüche

1. Vorrichtung (10) zur Ansteuerung einer sicherheitstechnischen Einrichtung in Abhängigkeit einer Integritätsprüfung eines Netzwerks der Informationstechnologie, aufweisend:
eine erste Schnittstelle (16) zur Kopplung der Vorrichtung mit einer sicherheitstechnischen Einrichtung, die dazu eingerichtet ist, eine Produktionsanlage (12) in einen sicheren Zustand zu überführen, in dem für Personen oder Gegenstände keine Gefährdung mehr von der Produktionsanlage (12) ausgeht; und
eine zweite Schnittstelle (18) zur Kopplung der Vorrichtung mit dem Netzwerk der Informationstechnologie (14),
wobei die Vorrichtung (10) dazu eingerichtet ist, eine Benachrichtigung über eine Netzwerkintegrität über die zweite Schnittstelle (18) zu empfangen und über die erste Schnittstelle (16) der sicherheitstechnischen Einrichtung zu signalisieren, den sicheren Zustand herbeizuführen, wenn die Benachrichtigung ausbleibt und/oder von einer definierten Erwartung abweicht.

2. Vorrichtung nach Anspruch 1, wobei die Benachrichtigung über die Netzwerkintegrität ein digitales Signal, ein Datenpaket und/oder eine Protokollnachricht ist, die jeweils einen aktuellen Status des IT-Netzwerks (14) in Bezug auf dessen Sicherheit und Funktionsfähigkeit beschreiben.

3. Vorrichtung nach einem der vorhergehenden Ansprüche, wobei die Benachrichtigung über die Netzwerkintegrität eine periodische Nachricht ist, die signalisiert, dass das IT-Netzwerk (14) erwartungsgemäß funktioniert.

4. Vorrichtung nach einem der vorhergehenden Ansprüche, wobei die Benachrichtigung über die Netzwerkintegrität (i) eine Alarmmeldung eines Eindringlingserkennungssystems des IT-Netzwerks (14) ist, (ii) eine Mitteilung einer Sicherheitsüberwachungssoftware des IT-Netzwerks (14) ist oder (iii) einen Netzwerkstatusbericht des IT-Netzwerks (14) beinhaltet.

5. Vorrichtung nach einem der vorhergehenden Ansprüche, ferner aufweisend eine Auswerteeinrichtung (20), die dazu eingerichtet ist, eingehende Benachrichtigungen über die Netzwerkintegrität auszuwerten und basierend darauf eine Entscheidung zu treffen, ob über die erste Schnittstelle (16) der sichere Zustand herbeizuführen ist.

6. Vorrichtung nach Anspruch 5, wobei die Auswerteeinrichtung (20) (i) eine dedizierte Hardwarekomponente der Vorrichtung, insbesondere ein Mikrocontroller oder FPGA, (ii) eine Softwarekomponente, die auf einem industriellen Edge-Computer oder Industrie-PC ausgeführt wird, oder (iii) eine Cloud- oder serverbasierte Auswerteeinrichtung ist.

7. Vorrichtung nach Anspruch 5 oder 6, wobei die Auswerteeinrichtung (20) dazu eingerichtet ist, eine Kommunikationsprüfung, eine Anomalieerkennung und/oder eine Bedrohungsanalyse durchzuführen.

8. Vorrichtung nach einem der Ansprüche 5 bis 7, wobei die Auswerteeinrichtung (20) dazu eingerichtet ist, die Netzwerkintegrität mittels eines Punktesystems zu bewerten, bei dem verschiedene detektierte Anomalien mit einer Gewichtung versehen werden, und eine sicherheitstechnische Abschaltung auszulösen, wenn ein definierter Schwellenwert überschritten wird.

9. Vorrichtung nach einem der Ansprüche 5 bis 8, wobei die Auswerteeinrichtung (20) ein selbstlernendes Modell für Anomalieerkennung aufweist, das auf maschinellem Lernen basiert und Abweichungen von einem normalen Netzwerkverkehr des IT-Netzwerks (14) anhand historischer Daten erkennt.

10. Vorrichtung nach einem der Ansprüche 5 bis 9, wobei die Auswerteeinrichtung (20) mit einer Datenbank gekoppelt ist, die historische Netzwerkintegritätsdaten speichert, um die Bewertung der Netzwerkintegrität durch Vergleich mit früheren Mustern zu optimieren.

11. Vorrichtung nach einem der Ansprüche 5 bis 10, wobei die Auswerteeinrichtung (20) dazu eingerichtet ist, Netzwerkaktivitäten mit vorab definierten Bedrohungsmustern aus einem Bedrohungsinformationssystem zu vergleichen und den sicheren Zustand herbeizuführen, wenn ein Bedrohungsmuster erkannt wird.

12. Vorrichtung nach einem der Ansprüche 5 bis 11, wobei die Auswerteeinrichtung (20) eine mehrstufige Reaktionsstrategie implementiert, bei der zunächst Warnmeldungen ausgegeben werden und eine sicherheitstechnische Abschaltung nur bei anhaltender oder eskalierender Bedrohung erfolgt.

13. Vorrichtung nach einem der Ansprüche 5 bis 12, wobei die Auswerteeinrichtung (20) eine künstliche Intelligenz aufweist, die über neuronale Netzwerke trainiert ist, um typische und atypische Kommunikationsmuster in dem IT-Netzwerk (14) zu unterscheiden, und/oder wobei die Auswerteeinrichtung (20) dazu eingerichtet ist, die Entscheidung über die Herbeiführung des sicheren Zustands unter Berücksichtigung einer Vielzahl von Parametern zu treffen, insbesondere basierend auf einer Paketverlustrate, ungewöhnlichen Verbindungen zu externen Servern, IDS/IPS-Alarmmeldungen und/oder der Häufigkeit von fehlgeschlagenen Anmeldeversuchen.

14. Vorrichtung nach einem der Ansprüche 5 bis 13, wobei die Auswerteeinrichtung (20) dazu eingerichtet ist, verschiedene Gewichtungsfaktoren für einzelne Anomalieparameter zu verwenden, um die Wahrscheinlichkeit einer tatsächlichen Bedrohung zu bestimmen, und/oder wobei die Auswerteeinrichtung (20) dazu eingerichtet ist, mit externen Cybersecurity-Plattformen zu kommunizieren, um in Echtzeit aktuelle Bedrohungsinformationen abzurufen und die Sicherheitsentscheidung entsprechend anzupassen.

15. Verfahren zur Ansteuerung einer sicherheitstechnischen Einrichtung in Abhängigkeit einer Integritätsprüfung eines Netzwerks der Informationstechnologie, aufweisend:
- Bereitstellen einer Vorrichtung mit einer ersten Schnittstelle (16) und mit einer zweiten Schnittstelle (18), wobei die erste Schnittstelle (16) mit einer sicherheitstechnischen Einrichtung koppelbar und dazu eingerichtet ist, eine Produktionsanlage (12) in einen sicheren Zustand zu überführen, in dem für Personen oder Gegenstände keine Gefährdung mehr von der Produktionsanlage (12) ausgeht, und wobei die zweite Schnittstelle (18) mit dem Netzwerk der Informationstechnologie (14) koppelbar ist;
- Empfangen einer Benachrichtigung über eine Netzwerkintegrität des IT-Netzwerks (14) über die zweite Schnittstelle (18);
- Vergleichen der empfangenen Benachrichtigung mit einer definierten Erwartung, um eine Abweichung oder ein Ausbleiben der Benachrichtigung zu detektieren;
- Signalisieren an die sicherheitstechnische Einrichtung über die erste Schnittstelle (16), den sicheren Zustand herbeizuführen, wenn die empfangene Benachrichtigung ausbleibt und/oder von der definierten Erwartung abweicht.
